# EUROPEAN PATENT SPECIFICATION

(11) **EP 1 769 942 B1**
(45) Date of publication and mention of the grant of the patent: **14.04.2010**
(21) Application number: 05765683.7
(22) Date of filing: 14.07.2005
(51) Int. Cl.: B60C 3/06, B60C 5/00, B60C 11/04

(54) **PNEUMATIC TIRE**
LUFTREIFEN
PNEUMATIQUE

(30) Priority: 21.07.2004 JP 2004213109
(43) Date of publication of application: 04.04.2007
(73) Proprietor: Bridgestone Corporation, Tokyo 104-8340 (JP)
(72) Inventor: TOYOSATO, Nobuaki c/o Bridgestone Corporation Technical, Tokyo 187-8531 (JP); ISHII, Shigemasa c/o Bridgestone Corporation Technical, Tokyo 187-8531 (JP)
(74) Representative: Whalley, Kevin
(86) International application number: PCT/JP2005/013040
(87) International publication number: WO 2006/009068

(56) References cited:
- EP-A- 0 325 905
- JP-A- 6 308 003
- JP-A- 8 164 715
- JP-A- 9 300 906
- JP-A- 10 035 225
- JP-A- 2000 043 511
- US-A- 4 271 889
- US-A- 4 785 863

## Description

### TECHNICAL FIELD

The present invention relates to a pneumatic tire with an enhanced traveling performance, in particular of lane changeability, with a suppressed degradation of abrasion resistance.

### BACKGROUND ART

Recent years have observed, along with enhanced performances of vehicles, strong demands for enhancement in traveling performances of pneumatic tires, such as a lane changeability as an ability to move from an ongoing lane to another lane, as well as a cornering performance as an ability to turn.

To respond to such demands, various proposals have been made. For example, a pneumatic tire has been proposed (Japanese Patent Application Laying-Open Publication No. Sho57-147901), which has in a section in a tire-width direction a gap in radius of curvature between an inner side when vehicle-mounted and an outer side when vehicle-mounted

This pneumatic tire has an enhanced traveling performance. However, due to the gap in radius of curvature between inner side when vehicle-mounted and outer side when vehicle-mounted, it has different road surface contact pressures between the inner side when vehicle-mounted and the outer side when vehicle-mounted, with a resultant degradation of abrasion resistance (wear life), as a problem.

The present invention is made in view of such points. It therefore is an object of the invention to provide a pneumatic tire with an enhanced traveling performance, in particular of lane changeability, allowing for a suppressed degradation of abrasion resistance.

Attention is also drawn to the documents US-A-427 1889, US-A-4 785 863 and EP-A-0 325 905.

### DISCLOSURE OF INVENTION

To solve the problem described, the present invention has the following aspects.

According to the invention, a pneumatic tire is provided according to claim 1.

The outer carcass periphery length set greater by 0.5mm to 10mm than the inner carcass periphery length provides a conicity, allowing smooth development of cornering forces upon lane change. This results in an enhanced lane changeability of pneumatic tire.

It is noted that if the outer carcass periphery length is identical to the inner carcass periphery length, or in excess under +0.5 mm, the lane changeability of the pneumatic tire will not be enhanced.

If the outer carcass periphery length is in excess over +10 mm in comparison with the inner carcass periphery length, the conicity gets excessively large, so that abrasion on the outer side when vehicle-mounted progresses fast

Further, in a pneumatic tire according to the invention, the skew angle that the outer rag groove has to the tire centerline ranges 50 degrees or more, which is closer to a regular quadrilateral block than a rhombic block in which the skew angle that the outer rag groove has to the tire centerline is small, so that the distortion of block can be minimized when the tire rolls. This results in a suppressed degradation of abrasion resistance on the outer side when vehicle-mounted by the conicity due to the outer carcass periphery length being set greater than the inner carcass periphery length. Further, with an enhanced rigidity of block, the lane changeability is the more enhanced.

According to the invention, the outer rag groove is arcuate toward the outer tire shoulder.

The outer rag groove being arcuate allows the distortion of block when the tire rolls to be further minimized, in comparison with a non-arcuate (straight) outer rag groove. This results in the more suppressed degradation of abrasion resistance on the outer side when vehicle-mounted. Further, according to this aspect, cornering forces upon lane change can develop smoothly, with a resultant enhancement in lane changeability of pneumatic tire.

Preferably, the pneumatic tire comprises an inner rag groove (inner rag groove 35) extending, relative to the tire centerline in a tread face of the tread portion constituting the inner side when vehicle-mounted, from the tire centerline side toward an inner tire shoulder (inner tire shoulder 20A), at a skew angle (skew angle Y) of 40 degrees or less from the tire centerline.

Although the inner rag groove has a skew angle of 40 degrees or less relative to the tire centerline, the outer rag groove has a skew angle of 50 degrees or more relative to the tire centerline, which compensates for a reduced performance in drainage.

The inner rag groove is preferably arcuate toward the inner tire shoulder.

The arcuate inner rag groove allows the distortion of block when the tire rolls to be minimized, in comparison with a non-arcuate (straight) inner rag groove. This results in the more suppressed degradation of abrasion resistance on the inner side when vehicle-mounted.

### BRIEF DESCRIPTION OF THE DRAWINGS

Fig. 1 is a section in a tread width direction of a pneumatic tire according to an embodiment of the invention.
Fig. 2 is an enlarged exploded view of a tread face constituting a tread portion according to an embodiment of the invention.

### BEST MODE FOR CARRYING OUT THE INVENTION

There will be described below an example of a pneumatic tire 1 according to the present invention, with reference to the drawings. It is noted that in the drawings, like or similar parts are designated by like or similar reference characters. It however is noted that the drawings are schematic, and proportions of dimensions or the like may be different from practices. Particular dimensions and the like should be judged in consideration of the following description. Mutual relationships and proportions of dimension may be different in part between drawings, as a matter of course.

### (Configuration of pneumatic tire according to the embodiment)

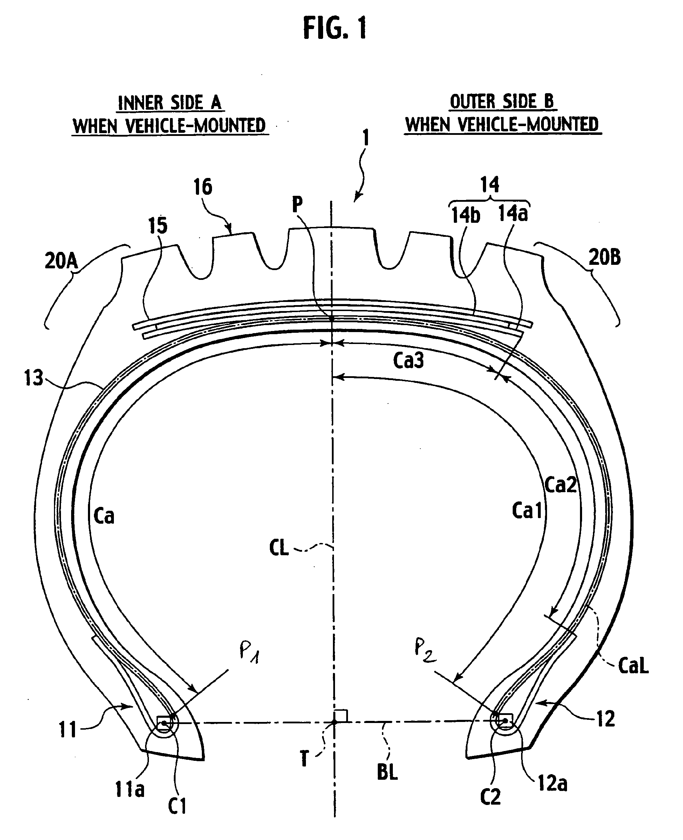

Fig. 1 is a section in a width direction of a pneumatic tire 1 according to the embodiment. As shown in Fig. 1, the pneumatic tire 1 has at least a bead portion 11 including a bead core 11 a located at an inner side A when vehicle-mounted (inner bead core), and a bead portion 12 including a bead core 12a located at an outer side B when vehicle-mounted (outer bead core). Specifically, aramid fiber cords (Kevlar, etc.) as well as steel cords or the like are employed for the bead core 11 a and the bead core 12a that constitute the bead portion 11 and the bead portion 12.

The pneumatic tire 1 has a carcass layer 13 that constitutes a frame of the pneumatic tire 1. It has a carcass periphery length Ca1 at the outer side B when vehicle-mounted (outside carcass periphery length), which is longer by 3 mm than a carcass periphery length Ca at the inner side A when vehicle-mounted (inner carcass periphery length).

Although the carcass periphery length Ca1 at the outer side B when vehicle-mounted is longer by 3 mm than the carcass periphery length Ca at the inner side A when vehicle-mounted, in the description above, this is not a limitation.

For example, a carcass periphery length Ca2 at the outer side B when vehicle-mounted may be longer by 3 mm than the carcass periphery length Ca at the inner side A when vehicle-mounted Further, a carcass periphery length Ca3 at the outer side B when vehicle-mounted may be longer by 3 mm than the carcass periphery length Ca at the inner side A when vehicle-mounted

The carcass periphery length is a distance along a carcass centerline CaL passing the center of carcass layer 13, from a crossing point P where the carcass centerline CaL and a tire centerline CL cross each other, to an approach point P1, P2 where an inner end of bead core 11a,12a is approached closest The tire centerline is a line that passes a center of, making right angels with, a bead line BL interconnecting a center C1 of the bead core 11a and a center C2 of the bead core 12a in the section in the tire width direction.

Tire-radially outside the carcass layer 13 is disposed a lamination of a first belt layer 14a and a second belt layer 14b. Tire-radially outside the second belt layer 14b is disposed a belt protecting layer 15. Tire-radially outside the belt protecting layer 15 is disposed a tread portion 16 that contacts a road surface.

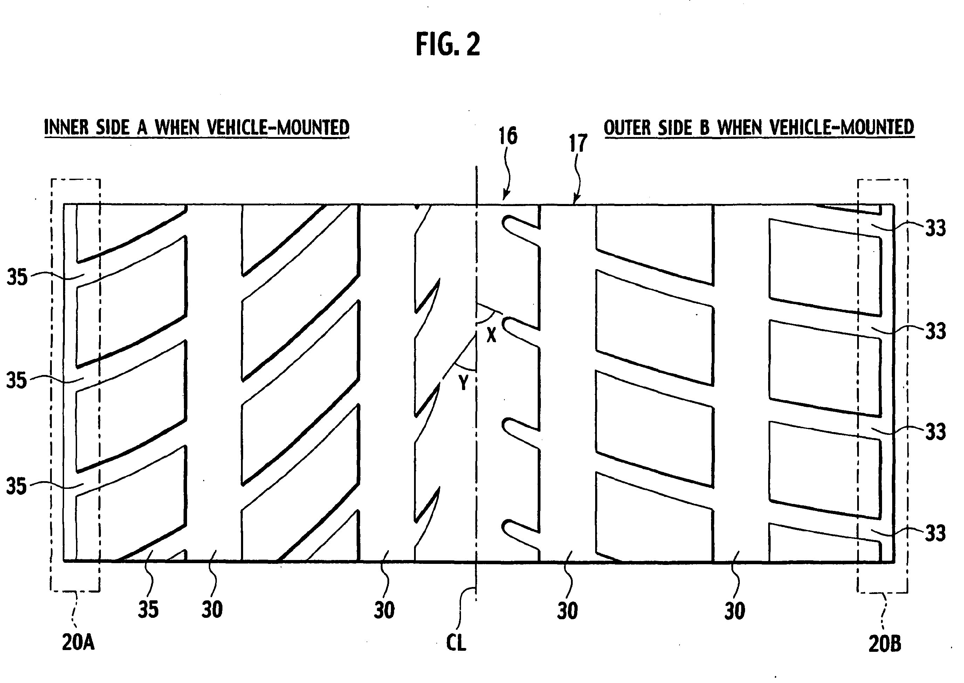

Description is now made of an exploded view of a tread face 17 constituting the tread portion 16 in the pneumatic tire 1 according to the embodiment, with reference made to Fig. 2. As shown in Fig. 2, the tread face 17 constituting the tread portion 16 is provided with circumferential principal grooves 30 formed in a tire-circumferential direction.

A region of tread face 17 constituting a region of tread portion 16 located at the outer side B when vehicle-mounted is provided with an outer rag groove 33 extending from the side of tire centerline CL toward a tire shoulder 20B (outer tire shoulder) at a skew angle X of 70 degrees relative to the tire centerline CL.

A region of tread face 17 constituting a region of tread portion 16 located at the inner side A when vehicle-mounted is provided with an inner rag groove 35 extending from the side of tire centerline CL toward a tire shoulder 20A (inner tire shoulder) at a skew angle Y of 36 degrees relative to the tire centerline CL.

The outer rag groove 33 and the inner rag groove 35 are arcuate, respectively. That is, the outer rag groove 33 has a greater skew angle relative to the tire centerline CL as a reference, on the tire shoulder 20B side, than on the tire centerline CL side. The inner rag groove 35 has a greater skew angle relative to the tire centerline CL as a reference, on the tire shoulder 20A side, than on the tire centerline CL side.

### (Function and effects)

According to the embodiment described, the pneumatic tire 1 has a carcass periphery length Ca1 set greater by 0.5mm to 10mm than carcass periphery length Ca, which provides a conicity, allowing smooth development of cornering forces upon lane change. This results in an enhanced lane changeability of pneumatic tire 1.

Further, the skew angle that the outer rag groove 33 has to the tire centerline CL ranges 50 degrees or more, which is closer to a regular quadrilateral block than a rhombic block in which the skew angle that the outer rag groove 33 has to the tire centerline CL is small, so that the distortion of block can be minimized when the tire rolls. This results in a suppressed degradation of abrasion resistance on the outer side B when vehicle-mounted by the conicity due to the carcass periphery length Ca1 being set greater than the carcass periphery length Ca.

The outer rag groove 33 being arcuate allows the distortion of block when the tire rolls to be further minimized, in comparison with a non-arcuate (straight) outer rag groove 33. This results in the more suppressed degradation of abrasion resistance on the outer side B when vehicle-mounted. Further, according to the feature of the invention, cornering forces upon lane change can develop smoothly, with a resultant enhancement in lane changeability of pneumatic tire 1.

Although the inner rag groove 35 has a skew angle of 40 degrees or less relative to the tire centerline CL, the outer rag groove 33 has a skew angle of 50 degrees or more relative to the tire centerline CL, which compensates for a reduced performance in drainage.

Further, the arcuate outer rag groove 33 allows the distortion of block when the tire rolls to be minimized, in comparison with a non-arcuate (straight) inner rag groove 33. This results in the more suppressed degradation of abrasion resistance on the inner side A when vehicle-mounted

### (Comparison and evaluation)

Description is now made of results of tests which employed pneumatic tires according to examples of embodiment of the invention, and as comparative examples, for clarification of effects of the invention.

Pneumatic tires employed as embodiment examples and comparative examples were each respectively "205/60R15" in size. That is, approx. 205 mm in width of section (tread width), approx. 60% in tire profile (ratio of tire height in section to tire width), and 15 inches in rim diameter.

The pneumatic tires for embodiment examples and comparative examples had a carcass layer 13 of two 110Tex polyester cords, a belt layer 14 of two steel cord layers, and a belt protection layer 15 of a single layer of 140 Tex nylon cord to the belt layer 14. Other materials used were all identical.

First, description is made of test results due to difference between a skew angle Y that an inner rag groove 35 has to a tire centerline CL and a skew angle X that an outer rag groove 33 has to the tire centerline CL, with reference made to Table 1.

### [Table 1]

### < Lane changeability test >

Pneumatic tires for comparative example 1-1 and embodiment example 1-1 were mounted to test cars (FF: 2,362cc), which moved in a straight section of a test track, from a constant speed travel of 140 km/h to the next lane (for 1 lane movement), when a professional driver evaluated the response (so-called steer feeling) and settlement (so-called settle feeling in the moved lane), etc. The lane changeability is excellent, as the value is greater.

As shown in Table 1, it turned out that pneumatic tires of embodiment example 1-1 were excellent in lane changeability in comparison with those of comparative example 1-1.

### < Tire life test >

Pneumatic tires for comparative example 1-1 and embodiment example 1-1 were driven to roll 2,000 km by a drum installed in a room, dropping fine grains of sand between the drum and tread portion 16, before estimation of a tire life as a time point where a remaining groove (such as a circumferential principal groove or rag groove) becomes 1.6 mm.

As shown in Table 1, it turned out that pneumatic tire of embodiment example 1-1 had a longer tire life, in comparison with pneumatic tire of comparative example 1-1. That is, the pneumatic tire of embodiment example 1-1 was evaluated as being excellent in abrasion resistance.

### < Combined results >

⊚denotes a case both lane changeability and tire life were excellent, and ○ denotes a case either lane changeability or tire life was excellent and either lane changeability or tire life was not excellent

As a result, it turned out that pneumatic tires according to embodiment example 1-1, in which the skew angle Y that the inner rag groove 35 had to the tire centerline CL was 40 degrees or less and the skew angle X that the outer rag groove 33 had to the tire centerline CL was 50 degrees or more, had an enhanced lane changeability, and long tire life (suppressed degradation of abrasion resistance).

Description is now made of test results due to differences of gap for an outer carcass periphery length Ca1 being greater than an inner carcass periphery length Cal, with reference made to Table 2.

### [Table 2]

### < Lane changeability test >

Pneumatic tires for comparative examples 2-1 to 2-6 and embodiment example 2-1 were mounted to test cars (FF: 2,362cc), which moved in a straight section of a test track, from a constant speed travel of 140 km/h to the next lane (for 1 lane movement), when a professional driver evaluated the response (so-called steer feeling) and settlement (so-called settle feeling in the moved lane), etc. The lane changeability is excellent, as the value is greater.

As shown in Table 2, it turned out that pneumatic tires of comparative examples 2-2 to 2-6 and embodiment example 2-1 were excellent in lane changeability in comparison with those of comparative example 2-1.

### < Tire life test >

Pneumatic tires for comparative examples 2-1 to 2-6 and embodiment example 2-1 were driven to roll 2,000 km by a drum installed in a room, dropping fine grains of sand between the drum and tread portion 16, before estimation of a tire life as a time point where a remaining groove (such as a circumferential principal groove or rag groove) becomes 1.6 mm.

As shown in Table 1, it turned out that pneumatic tire of comparative examples 2-2 to 2-5 and embodiment example 2-1 had a longer tire life (it turned out that they can travel 20,000 km or more), in comparison with pneumatic tires of comparative examples 2-1 and 2-6. That is, the pneumatic tires of comparative examples 2-2 to 2-5 and embodiment example 2-1 were evaluated as being excellent in abrasion resistance.

### < Combined results >

⊚denotes a case both lane changeability and tire life were excellent, and ○ denotes a case either lane changeability or tire life was excellent and either lane changeability or tire life was not excellent - denotes a case neither lane changeability nor tire life was not excellent

As a result, it turned out that pneumatic tire according to embodiment example 2-1, in which the outer carcass periphery length Ca1 was greater by 3.0 mm than the inner carcass periphery length Ca, had an enhanced lane changeability, and long tire life (suppressed degradation of abrasion resistance).

Further, it turned out that pneumatic tires according to comparative examples 2-2 to 2-5, in which the outer carcass periphery length Ca1 was greater by 0.5 mm to 10 mm (except for 3.0 mm) than the inner carcass periphery length Ca, had a maintained lane changeability, and long tire life (suppressed degradation of abrasion resistance).

### INDUSTRIAL APPLICABILITY

As mentioned above, a pneumatic tire according to the invention has an enhanced traveling performance, in particular in lane changeability, and suppressed degradation of abrasion resistance, and is useful in fabrication technology of pneumatic tire or the like.

**TABLE 1**

| | COMPARATIVE EXAMPLE 1-1 | EXAMPLE 1-1 |
|---|---|---|
| INNER/OUTER PERIPHRY LENGTH DIFFERENCE (mm) | 3 | 3 |
| INNER RAG GROOVE ANGLE | 47 | 36 |
| OUTER RAG GROOVE ANGLE | 47 | 70 |
| LANE CHANGEABILITY | 6.5 | 7 |
| TIRE LIFE (km) | 21700 | 24400 |
| COMBINED RESULTS | ○ | ⊚ |

**TABLE 2**

| | COMPARATIVE EXAMPLE 2-1 | COMPARATIVE EXAMPLE 2-2 | COMPARATIVE EXAMPLE 2-3 | COMPARATIVE EXAMPLE 2-4 | EXAMPLE 2-1 | COMPARATIVE EXAMPLE 2-5 | COMPARATIVE EXAMPLE 2-6 |
|---|---|---|---|---|---|---|---|
| INNER/OUTER PERIPHRY LENGTH DIFFERENCE (mm) | 0.4 | 0.5 | 1 | 2 | 3 | 10 | 11 |
| INNER RAG GROOVE ANGLE | 36 | 36 | 36 | 36 | 36 | 36 | 36 |
| OUTER RAG GROOVE ANGLE | 70 | 70 | 70 | 70 | 70 | 70 | 70 |
| LANE CHANGEABILITY | 4.5 | 5 | 5.0+ | 5,5 | 6 | 6 | 5 |
| TIRE LIFE (km) | 19800 | 20500 | 22000 | 23000 | 24400 | 20100 | 19000 |
| COMBINED RESULTS | - | ○ | ○ | ○ | ⊚ | ○ | - |

## Claims

1. A pneumatic tire (1) comprising:
bead portions (11, 12) including an inner bead core (11a) located on an inner side (A) when vehicle-mounted and an outer bead core (12a) located on an outer side (B) when vehicle-mounted;
at least a carcass layer (13) and a tread portion (16) disposed in a direction from a tire-radially inner side to a tire-radially outer side; and
an outer rag groove (33) extending,
relative to a tire centerline (CL) passing a center (T) of, making right angles with, a bead line (BL) interconnecting a center (C1) of the inner bead core (11a) and a center (C2) of the outer bead core (12a) in a section in a tire-width direction,
in a tread face (17) of the tread portion (16) constituting the outer side (B) when vehicle-mounted,
from the tire centerline side toward an outer tire shoulder (20B),
at a skew angle (X) of 50 degrees or more from the tire centreline (CL), wherein in the section in the tire-width direction,
an outer carcass periphery length (Ca1)
as a distance along a carcass centerline (CaL) passing a center of the carcass layer (13),
from a crossing point (P) where the carcass centerline (CaL) and the tire centerline (CL) cross,
to a point (P2) where an inner end of the outer bead core (12a) is approached closest,
is greater by 0.5 mm to 10 mm than an inner carcass periphery length (Ca)
as a distance along the carcass centreline (CaL)
from the crossing point (P)
to a point (P1) where an inner end of the inner bead core (11 a) is approached closest,
wherein
the outer rag groove (33) is arcuate from the tire centerline side toward the outer tire shoulder (20B); and
the outer rag groove (33) has a greater skew angle (X) relative to the tire centreline (CL) as a reference on the outer tire shoulder (20B) side than on the tire centerline.

2. The pneumatic tire (1) as claimed in claim 1, comprising an inner rag groove (35) extending,
relative to the tire centreline (CL)
in a tread face (17) of the tread portion (16) constituting the inner side (A) when vehicle-mounted,
from the tire centerline side toward an inner tire shoulder (20A),
at a skew angle (Y) of 40 degrees or less from the tire centreline (CL).

3. The pneumatic tire (1) as claimed in claim 2, wherein the inner rag groove (35) is arcuate toward the inner tire shoulder (20A).

## Patentansprüche

1. Luftreifen (1), der Folgendes umfasst:
Wulstabschnitte (11, 12), die einen inneren Wulstkern (11a), der, wenn am Fahrzeug angebracht, auf einer inneren Seite (A) angeordnet ist, und einen äußeren Wulstkern (12a), der, wenn am Fahrzeug angebracht, auf einer äußeren Seite (B) angeordnet ist, einschließen,
wenigstens eine Karkassenlage (13) und einen Laufflächenabschnitt (16), der in einer Richtung von einer radialen inneren Reifenseite zu einer radialen äußeren Reifenseite angeordnet ist, und
eine äußere Querrille (33), die sich erstreckt:
im Verhältnis zu einer Reifenmittellinie (CL), die durch einen Mittelpunkt (T) einer Wulstlinie (BL) hindurchgeht, wobei sie einen rechten Winkel mit derselben bildet, die einen Mittelpunkt (C1) des inneren Wulstkerns (11a) und einen Mittelpunkt (C2) des äußeren Wulstkerns (12a) miteinander verbindet, in einem Schnitt in einer Reifenbreitenrichtung,
in einer Profilfläche (17) des Laufflächenabschnitts (16), die, wenn am Fahrzeug angebracht, die äußere Seite (B) bildet,
von der Seite der Reifenmittellinie zu einer äußeren Reifenschulter (20B) hin,
in einem schiefen Winkel (X) von 50 Grad oder mehr von der Reifenmittellinie (CL),
wobei in dem Schnitt in der Reifenbreitenrichtung:
eine äußere Karkassenumfangslänge (Ca1)
als ein Abstand längs einer Karkassenmittellinie (CaL), die durch einen Mittelpunkt der Karkassenlage (13) hindurchgeht,
von einem Kreuzungspunkt (P), wo sich die Karkassenmittellinie (CaL) und die Reifenmittellinie (CL) kreuzen,
bis zu einem Punkt (P2), wo sich einem inneren Ende des äußeren Wulstkerns (12a) am nächsten angenähert wird,
um 0,5 mm bis 10 mm größer ist als eine innere Karkassenumfangslänge (Ca)
als ein Abstand längs der Karkassenmittellinie (CaL)
von dem Kreuzungspunkt (P)
bis zu einem Punkt (P1), wo sich einem inneren Ende des inneren Wulstkerns (11a) am nächsten angenähert wird,
wobei
die äußere Querrille (33) von der Seite der Reifenmittellinie zu der äußeren Reifenschulter (20B) hin bogenförmig ist und
die äußere Querrille (33) auf der Seite der äußeren Reifenschulter (20B) einen größeren schrägen Winkel (X) im Verhältnis zu der Reifenmittellinie (CL) als ein Bezug hat als auf der Reifenmittellinie.

2. Luftreifen (1) nach Anspruch 1, der eine innere Querrille (35) umfasst, die sich erstreckt:
im Verhältnis zu der Reifenmittellinie (CL)
in einer Profilfläche (17) des Laufflächenabschnitts (16), die, wenn am Fahrzeug angebracht, die innere Seite (A) bildet,
von der Seite der Reifenmittellinie zu einer inneren Reifenschulter (20A) hin,
in einem schiefen Winkel (Y) von 40 Grad oder weniger von der Reifenmittellinie (CL).

3. Luftreifen (1) nach Anspruch 2, wobei die innere Querrille (35) zu der inneren Reifenschulter (20A) hin bogenförmig ist.

## Revendications

1. Bandage pneumatique (1), comprenant :
des parties de talon (11, 12), englobant une tringle interne (11a) agencée sur un côté interne (A) lors du montage sur un véhicule, et une tringle externe (12a) agencée sur un côté externe (B) lors du montage sur un véhicule;
au moins une nappe de carcasse (13) et une partie de bande de roulement (16) disposées dans une direction allant d'un côté radialement interne du bandage pneumatique vers un côté radialement externe du bandage pneumatique; et
une rainure décalée externe (33), s'étendant
par rapport à une ligne médiane du bandage pneumatique (CL) traversant un centre (T) d'une ligne de talon (BL) et formant un angle droit par rapport à celle-ci, la ligne de talon interconnectant un centre (C1) de la tringle interne (11a) et un centre (C2) de la tringle externe (12) dans une section dans une direction de la largeur du bandage pneumatique,
dans une face de la bande de roulement (17) de la partie de bande de roulement (16) constituant le côté externe (B) lors du montage sur un véhicule;
de la ligne médiane du bandage pneumatique vers un épaulement externe du bandage pneumatique (20B),
à un angle oblique (X) de 50 degrés ou plus à partie de la ligne médiane du bandage pneumatique (CL), où dans la section dans la direction de la largeur du bandage pneumatique:
une longueur périphérique externe de la carcasse (Ca1);
constituant une distance le long d'une ligne médiane de la carcasse (CaL) traversant un centre de la nappe de carcasse (13);
à partir d'un point de croisement (P) où la ligne médiane de la carcasse (CaL) et la ligne médiane du bandage pneumatique (CL) se croisent;
vers un point (P2), au niveau duquel une extrémité interne de la tringle externe (12a) est approchée le plus étroitement;
étant supérieure de 0,5 mm à 10 mm à une longueur périphérique interne de la carcasse (Ca);
constituant une distance le long de la ligne médiane de la carcasse (CaL)
du point de croisement (P)
vers un point (P1) au niveau duquel une extrémité interne de la tringle interne (11a) est approchée le plus étroitement;
dans lequel
la rainure décalée externe (33) est arquée du côté de la ligne médiane du bandage pneumatique vers l'épaulement externe du bandage pneumatique (20B); et
la rainure décalée externe (33) forme un angle oblique plus grand (X) par rapport à la ligne médiane du bandage pneumatique (CL), constituant une référence sur le côté de l'épaulement externe du bandage pneumatique (20B), que sur le côté de la ligne médiane du bandage pneumatique.

2. Bandage pneumatique (1) selon la revendication 1, comprenant une rainure décalée interne (35), s'étendant
par rapport à la ligne médiane du bandage pneumatique (CL);
dans une face de la bande de roulement (17) de la partie de bande de roulement (16), constituant le côté interne (A) lors du montage sur un véhicule;
du côté de la ligne médiane du bandage pneumatique vers un épaulement interne du bandage pneumatique (20A);
à un angle oblique (Y) de 40 degrés ou moins à partir de la ligne médiane du bandage pneumatique (CL).

3. Bandage pneumatique (1) selon la revendication 2, dans lequel la rainure décalée interne (35) est arquée vers l'épaulement interne du bandage pneumatique (20A).
